Europäisches Patentamt

(19) European Patent Office

Office européen des brevets

(11) Publication number: **0 025 024**
**B1**

(12) EUROPEAN PATENT SPECIFICATION

(45) Date of publication of patent specification: **27.07.83**　　(51) Int. Cl.³: **A 23 K 1/175**

(21) Application number: **80850125.8**

(22) Date of filing: **26.08.80**

(54) A method of producing so-called lick stones.

(30) Priority: **28.08.79 SE 7907158**

(43) Date of publication of application:
**11.03.81 Bulletin 81/10**

(45) Publication of the grant of the patent:
**27.07.83 Bulletin 83/30**

(84) Designated Contracting States:
**AT BE CH DE FR GB IT LI LU NL**

(56) References cited:
**DE - A - 1 692 462**
**DE - B - 1 150 269**
**DE - C - 806 823**
**FR - A - 2 384 538**

**CHEMISCHES ZENTRALBLATT, no. 45, 5th**
**November 1958, page 12846 W. N. AISENBERG**
**et. al.,: "Die Abfälle der Soda- und Salzindustrie**
**für die Tierzucht".**

(73) Proprietor: **Boliden Aktiebolag**
**Box 5508**
**S-114 85 Stockholm (SE)**

(72) Inventor: **Lagerström, Gösta Bertil**
**Barmästarvägen 16**
**S-260 33 Paarp (SE)**

(74) Representative: **Lundin, Björn-Eric et al,**
**Boliden Aktiebolag Box 5508**
**S-114 85 Stockholm (SE)**

### A method of producing so-called lick stones

The present invention relates to a method of producing so-called mineral lick stones or salt licks for animals, particularly ruminants.

The use of lick stones is an effective method of providing cattle with mineral fodder, particularly during the grazing periods. The stones are quite simply placed on the grazing pasture, and the animals satisfy their requirements by licking the stones. Mineral fodder can also be given the form of mixtures which are placed in troughs or the like. This method requires a more comprehensive arrangement, primarily to protect the foodstuff against rain. In order for a lick stone to fulfil its purpose, it must be strong enough to withstand mechanical stresses, be able to withstand being frozen and to thaw out without disintegrating, e.g. when stored outdoors during the winter, and to resist rain, while at the same time enabling the cattle to obtain a sufficient quantity of mineral fodder when the stone is licked.

Mineral lick stones comprising three different components are known from DE—C, 806 823, and four-component lick stones are known from FR—A, 2 384 538. Other lick stones are known from DE—A, 1 692 462 and DE—B, 1 150 269.

Mineral lick stones are normally manufactured by compressing a mixture of powderous components under high pressure, or by casting a molten mass comprising readily melted components, e.g. monosodium phosphate, disodium phosphate, admixed with different salts of high melting point, e.g. sodium chloride, magnesium phosphate.

In the case of lick stones manufactured in accordance with the compression method, one is forced to work within narrow limits with regard to the composition of the stone, in order to obtain the requisite mechanical strength. This method of manufacture also requires the provision of expensive equipment for obtaining the necessary high pressures.

The method of manufacturing lick stones by casting a molten mass also has its limitations, because it requires the use of components having low melting points. Furthermore, this particular method requires the use of heating devices. (C.f. French Patent Specification No. 2 163 116).

The manufacture of lick stones by casting methods can also be effected by mixing salts, e.g. sodium phosphates, which are poor in chemically combined water, with other components, and then adding water in a quantity corresponding to the ability of the mixture to bind chemically combined water to provide a castable mass. This method requires access to salts which are poor in chemically combined water. Furthermore, the possibilities of varying the composition are restricted by the requirement that the addition of water shall provide a castable mass and must not cause the binding ability to be lost.

FR—A, 2 384 538 discloses a mineral fodder for animals, particularly ruminants, comprising at least 30% by weight of a phosphate soluble in water, at least 10% by weight of a nutritive calcium compound providing $Ca^{2+}$ ions that may react with the phosphate ions, as well as a phosphate partially soluble in water, whereby the components are reacted together in an exothermic reaction in an aqueous phase comprising no more than 70% of water calculated on the dry components added.

Hereby a) sodium tripolyphosphate is a most preferred ingredient; b) a magnesium compound in the form of magnesium carbonate, magnesium oxide, or ammonium-magnesium phosphate is another most preferred compound, which components a) and b) very strongly act on the reactivity of the mixture in producing a lick stone. Furthermore, relatively large quantities ($\geqslant$30%) of water are necessary to produce a lick stone.

Gypsum and sodium tripolyphosphate have also been suggested as binding agents for the casting of lick stones. The known technique for casting lick stones is based, in all cases, on the ability of different salts to bind the chemically combined water in a manner to provide a mechanically strong product.

An object of the present invention is therefore to provide a novel mineral lock stone and a novel method for the manufacture thereof, in which the aforementioned disadvantages associated with known techniques are eliminated or substantially reduced.

In conjunction with the advent of the invention it has been surprisingly found that mineral lick stones exhibiting good properties can be produced by mixing the components: (a) calcium phosphate, optionally (b) monosodium phosphate, and (c) calcium carbonate, in the weight ratios of a 10—80%; 0—50%; and 15—60%, respectively in the presence of water while adding sodium chloride, to obtain a castable mass; whereby water is present in a quantity of at most 15 percent by weight calculated on the solid constituent content of the casting mass, with the exception of any chemically combined water contained therein; forming said mass into a desired shape, and permitting said mass to harden, said hardening being effected by reaction between the components of said mass.

The sodium chloride, for example in the form of rock salt, is suitably added in a quantity such as to constitute 10—70% of the total weight of the aforementioned three components.

Preferably at least one of the components of the casting mass has a coarse-grained or granular form. In this way the amount of water required can be reduced, which shortens the hardening time while still providing a product of satisfactory mechanical strength.

In addition to the aforementioned components, the mixture or casting mass may also include substances normally included in fodder mixtures, such as magnesium compounds, e.g. magnesium phosphate, magnesium oxide and the like, urea, trace elements, vitamins, molasses, sugar and flavouring agents. The binding obtained in the product by applying the technique according to present invention has been found sufficient to enable a substantial quantity of desirable additional constituents to be added, and still obtain an acceptable end product. Thus, for example, molasses can be added in an amount of up to 10% by weight calculated on the product as a whole, without jeopardizing the mechanical strength of the lick stone.

The technique according to the present invention affords the important advantage whereby only a minor amount of water need be included when forming the product, suitably at most about 15 per cent by weight calculated on the sold-constituent content of the casting mass. In this percentage is also included any chemically combined water present in the components. Thus, the low water content greatly reduces the hardening time, while still providing a product which has a high mechanical strength and which exhibits favourable properties.

The invention will now be described with reference to a number of exemplary embodiments, in which the percentages given are percentages by weight, unless otherwise stated.

Example 1

10 kg of a mixture comprising 21.0% of granular calcium phosphate (18% Ca, 22% P., grain size 0.3—1.5 mm), 15.9% monosodium phosphate ($NaH_2PO_4 \cdot H_2O$), 16.0% limestone flour (39% Ca), 12.9% granular magnesium phosphate (22% Mg, 13% P, particle size 0.3—1.5 mm containing $MgHPO_4 \cdot 3H_2O$ and MgO), 3.5% trace mixture (Zn, Mn, Cu, Co, I and Se) and 30.7% rock salt (39% Na, particle size 1—4 mm) were mixed with 700 grams of molasses and 400 grams of water. The mixture was then poured into a mould. After one hour, the mixture had hardened.

Example 2

10 kg of the mixture of the same composition as that in Example 1 but with the calcium phosphate and magnesium phosphate in finely ground form (grain size <0.2 mm) were mixed with 700 g of molasses and water. 1100 grams of water were used to obtain the same consistency as in the experiment with granulated phosphate. The mixture was poured into a mould. After about four hours the hardness of the mass was considered equal to that achieved after one hour with granulated phosphates. The lick stones obtained were distributed on pasture land, on which a group of 41 cattle were grazing. All the slicks were consumed at the same rate. The slicks were practically totally consumed after 6 days, corresponding to an average consumption of 81 grams per animal per day.

Example 3

Two mixtures were prepared from the same components as those recited in Example 1, in accordance with the following recipe:

|  | Mixture 1 | Mixture 2 |
|---|---|---|
| Calcium phosphate | 31.6% | 31.6% |
| Monosodium phosphate | 34.8% | 17.4% |
| Limetone | 17.5% | 17.5% |
| Rock salt | 16.1% | 33.5% |

Three lick stones were produced from each mixture by mixing 85 g of molasses and 45 and 86 g respectively of water and allowing the mass to harden in moulds. After ten days at room temperature the stones were stored at —23°C for three days and then for three days at +20°C. The freezing and thawing processes were repeated three times. No damage, such as crack formation, could be established.

Example 4

A lick stone manufacture in accordance with Example 1 and two commercially available mineral lick stones having approximately the same mineral composition, were placed on pasture land on which a group of 50 cattle were grazing. The test was continued for nine days. Of the commercially available stones, <10 grams per animal per day were consumed, while in the case of the test stone produced in accordance with the invention 85 grams per day per animal were consumed (4 stones were used in the test). The commercially available stones were removed and the test was extended for a further three weeks. The consumption varied between 85 and 150 grams per animal per day.

Claims

1. A method of producing so-called lick stones, i.e. a mineral product intended for animals, particularly ruminants, characterized by mixing the components (a) calcium phosphate, optionally (b) monosodium phosphate, and (c) calcium carbonate in the weight ratios of 10—80%; 0—50%; and 15—60%, respectively in the presence of water while adding sodium chloride, to obtain a castable mass; whereby water is present in a quantity of at most 15 per cent by weight calculated on the solid constituent content of the casting mass, with the exception of any chemically combined water contained therein; forming said mass into a desired shape, and permitting said mass to harden, said hardening being effected by reaction between the components of said mass.

2. A method according to Claim 1, wherein the sodium chloride is added in an amount such that it constitutes 10—70% of the total weight of the components (a), (b), and (c).

3. A method according to any one of the preceding claims, characterized in that least one of the components is used in a coarse-grain or granular form.

## Patentansprüche

1. Verfahren zur Herstellung von sogenannten Lecksteinen, d.h. eines Mineralproduktes für Tiere, besonders Wiederkäuer, dadurch gekennzeichnet, daß man die Komponenten a) Calciumphosphat, gegebenenfalls b) Mononatriumphosphate und c) Calciumcarbonat in den Gewichtsverhältnissen 10 bis 80%, 0 bis 50% bzw. 15 bis 60% in Gegenwart von Wasser unter Zugabe von Natriumchlorid miteinander vermischt und so eine gießfähige Masse erhält, wobei Wasser in einer Menge von höchstens 15 Gewichts-%, berechnet auf den Feststoffgehalt der Gießmasse und unter Abzug darin enthaltenen chemisch gebundenen Wassers vorhanden ist, diese Masse in eine erwünschte Form bringt und die Masse aushärten läßt, wobei das Härten durch Reaktion zwischen den Komponenten der Masser erfolgt.

2. Verfahren nach Anspruch 1, worin das Natriumchlorid in einer solchen Menge zugesetzt wird, daß es 10 bis 70% des Gesamtgewichtes der Komponenten a), b) und c) ausmacht.

3. Verfahren nach einem der vorausgehenden Ansprüche, dadurch gekennzeichnet, daß wenigstens eine der Komponenten in einer grobkörnigen oder granalienartigen Form verwendet wird.

## Revendications

1. Procédé de production d'un produit dénommé pierres salées, c'est-à-dire un produit minéral pour animaux, en particulier pour ruminants, caractérisé en ce qu'il consiste à mélanger des composants (a) phosphate de calcium, éventuellement (b) phosphate mono-sodique, et (c) carbonate de calcium dans les rapports pondéraux de respectivement 10—80%, 0—50% et 15—60%, e présence d'eau tout en ajoutant du chlorure de sodium, de manière à obtenir une masse coulable, l'eau étant présente en une quantité de tout au plus 15% en poids par rapport à la teneur en constituants solides de la masse de coulée, à l'exception de toute quantité d'eau chimiquement combinée contenue dans celle-ci, à amener ladite masse sous une forme désirée, et à laisser cette masse durcir, ce durcissement étant effectué par la réaction entre les composants de ladite masse.

2. Procédé suivant la revendication 1, dans lequel on ajoute le chlorure de sodium en une quantité telle qu'il constitue 10 à 70% du poids total des composants (a), (b) et (c).

3. Procédé suivant l'une quelconque des revendications précédentes, caractérisé en ce qu'au moins l'un des composants est utilisé sous une forme à gros grains ou granulaire.